# EUROPÄISCHE PATENTSCHRIFT

(11) **EP 3 437 343 B1**
(45) Veröffentlichungstag und Bekanntmachung des Hinweises auf die Patenterteilung: **20.01.2021**
(21) Anmeldenummer: 17714159.5
(22) Anmeldetag: 15.03.2017
(51) Int. Cl.: H04W 4/02, G08G 1/16

(54) **VERFAHREN, VORRICHTUNGEN UND COMPUTERPROGRAMM ZUM INITIIEREN ODER DURCHFÜHREN EINES KOOPERATIVEN FAHRMANÖVERS**
METHOD, DEVICES AND COMPUTER PROGRAM FOR INITIATING OR CARRYING OUT A COOPERATIVE DRIVING MANOEUVRE
PROCÉDÉS, DISPOSITIFS ET LOGICIEL DE DÉMARRAGE OU DE RÉALISATION D'UNE MAN UVRE DE CONDUITE COOPÉRATIVE

(30) Priorität: 29.03.2016 DE 102016205142
(43) Veröffentlichungstag der Anmeldung: 06.02.2019
(73) Patentinhaber: Volkswagen Aktiengesellschaft, 38440 Wolfsburg (DE)
(72) Erfinder: RECH, Bernd, 38556 Bokensdorf (DE); GLÄSER, Stefan, 38104 Braunschweig (DE); ENGEL, Monique, 38110 Braunschweig (DE); LEHMANN, Bernd, 38444 Wolfsburg (DE); KLEINAU, Sandra, 38531 Rötgesbüttel (DE); GÜNTHER, Hendrik-Jörn, Troy, Michigan 48084 (US); BUBURUZAN, Teodor, 38118 Braunschweig (DE); KÖHNKE, Axel, 48259 Dülmen (DE)
(86) Internationale Anmeldenummer: PCT/EP2017/056121
(87) Internationale Veröffentlichungsnummer: WO 2017/167580

(56) Entgegenhaltungen:
- DE-A1-102012 218 935
- DE-A1-102014 105 474

## Beschreibung

Die Erfindung bezieht sich auf Verfahren, Vorrichtungen und ein Computerprogramm zum Initiieren eines kooperativen Fahrmanövers, genauer, aber nicht ausschließlich, basierend auf Fahrintentionsnachrichten, die über Fahrzeug-zu-Fahrzeug-Kommunikation bereitgestellt werden.

Fahrzeug-zu-Fahrzeug-Kommunikation (auch engl. Car2Car, C2C, oder Vehicle2Vehicle, V2V) und Fahrzeug-zu-Infrastruktur-Kommunikation (auch engl. Car2lnfrastructure, C2I oder Vehicle2Roadside, V2R) sind ein Brennpunkt automobiler Forschung im 21. Jahrhundert. Die Kommunikation zwischen Fahrzeugen oder zwischen Fahrzeugen oder Verkehrsinfrastruktur ermöglicht eine Vielzahl neuer Möglichkeiten, beispielsweise eine Koordination von Fahrzeugen untereinander oder eine Kommunikation von Fahrzeugen mit der Verkehrsinfrastruktur, beispielsweise um den Fahrzeugen Stauwarnungen bereitzustellen. Dabei besitzen Fahrzeuge, die zur C2C oder C2I (auch zusammengefasst unter Fahrzeug-zu-X-Kommunikation, engl. Car2X, C2X oder Vehicle2X, V2X) ausgebildet sind eine Sende- und Empfangseinheit um mit anderen Fahrzeugen kommunizieren zu können, beispielsweise über direkte Funkverbindungen oder Mobilfunknetzwerke. Die Kommunikation kann dabei beispielsweise zwischen Fahrzeugen oder zwischen Fahrzeugen und Verkehrsinfrastruktur innerhalb eines Radius von wenigen hundert Metern begrenzt sein.

Eine Koordination von Fahrzeugen, beispielsweise zum kooperativen Ausführen von Fahrmanövern oder zur Koordination von automatisierten Fahrzeugen, ist häufig abhängig von einer Qualität der Informationen, die über die Fahrzeuge in einer Umgebung verfügbar sind. Sind Fahrzeuge mit Fahrzeug-zu-Fahrzeug-Kommunikationssystemen ausgestattet, so können diese häufig in kooperativen Fahrsituationen miteinbezogen werden.

Aus DE 10 2012 218935 A1 ist ein Fahrzeugeinfädelsteuersystem bekannt, bei dem eine Zeit zum Kreuzen zweiter Fahrzeuge berechnet wird. Basierend darauf übermittelt ein Trägerfahrzeug eine Absichtsnachricht zum Aushandeln einer Einfädelposition zu einem entfernten Fahrzeug. Das Trägerfahrzeug führt daraufhin das Einfädelmanöver basierend auf der ausgehandelten Einfädelposition aus.

In DE 10 2014 105474 A1 ist ein Verfahren zur Kommunikation zwischen einem Einsatzfahrzeug und sonstigen Fahrzeugen gezeigt, wobei von dem Einsatzfahrzeug Handlungsempfehlungen für die sonstigen Fahrzeuge abgesetzt werden.

Es besteht der Bedarf nach einem verbesserten Konzept zur Unterstützung von kooperativen Fahrfunktionen. Diesem Bedarf wird durch die Verfahren und Vorrichtungen gemäß den unabhängigen Ansprüchen Rechnung getragen.

Ausführungsbeispiele schaffen ein Verfahren zum Initiieren eines kooperativen Fahrmanövers. Will ein Fahrzeug in zumindest einigen Ausführungsbeispielen ein Fahrmanöver durchführen, beispielsweise einen Spurwechsel, so kann das Verfahren Fahrintentionsnachrichten über eine Fahrzeug-zu-Fahrzeugschnittstelle anderen Fahrzeugen in der Umgebung bereitstellen, etwa um diesen mitzuteilen, dass das Fahrzeug das Fahrmanöver durchführen möchte. Um eine erhöhte Empfangswahrscheinlichkeit zu ermöglichen werden ferner Übertragungsparameter, beispielsweise eine Wiederholrate oder ein Sendezeitpunkt, je nach Position und Fahrintention berechnet. Basierend auf diesen Übertragungsparametern wird die Fahrintentionsnachricht dann den Fahrzeugen in einer Umgebung des Fahrzeugs als direkte Fahrzeug-zu-Fahrzeug-Nachricht bereitgestellt.

Ausführungsbeispiele schaffen ein Verfahren zum Initiieren eines kooperativen Fahrmanövers durch Bereitstellen einer Fahrintentionsnachricht für Fahrzeuge in einer Umgebung eines Fahrzeugs. Die Fahrintentionsnachricht umfasst Information über eine Intention eines Fahrers oder eines zumindest teilautomatischen Fahrzeugsteuersystems des Fahrzeugs, ein Fahrmanöver durchzuführen. Das Verfahren umfasst Erhalten von Information über eine Fahrintention. Die Fahrintention basiert auf der Intention zum Durchführen des Fahrmanövers. Das Verfahren umfasst ferner Bestimmen einer Position des Fahrzeugs. Das Verfahren umfasst ferner Bestimmen der Fahrintentionsnachricht, basierend auf der Information über die Fahrintention. Das Verfahren umfasst ferner Berechnen von Übertragungsparametern für die Fahrintentionsnachricht. Die Übertragungsparameter umfassen eine Wiederholrate und einen Sendezeitpunkt. Das Berechnen der Übertragungsparameter basiert auf einer gewünschten Empfangswahrscheinlichkeit der Fahrintentionsnachricht, der Fahrintention und der Position des Fahrzeugs. Das Verfahren umfasst ferner Bereitstellen der Fahrintentionsnachricht als direkte Fahrzeug-zu-Fahrzeug-Nachricht für die Fahrzeuge in der Umgebung des Fahrzeugs basierend auf den Übertragungsparametern. Das Bereitstellen der Fahrintentionsnachricht kann eine Kooperation von Fahrzeugen zum Ermöglichen oder vereinfachen eines Fahrmanövers etwa eines Fahrstreifenwechselvorgangs, ermöglichen. Das Berechnen der Übertragungsparameter ermöglicht eine Verbesserung einer Übertragungswahrscheinlichkeit der Fahrintentionsnachricht, indem die Übertragung beispielsweise situativ und/oder basierend auf der Fahrintention angepasst wird.

In manchen Ausführungsbeispielen kann das Verfahren ferner ein Empfangen einer Nachricht über ein Akzeptieren des kooperativen Fahrmanövers, als Antwort auf die Fahrintentionsnachricht, von zumindest einem der Fahrzeuge in der Umgebung des Fahrzeugs umfassen. Das Berechnen der Übertragungsparameter kann ferner auf der Nachricht über das Akzeptieren des kooperativen Fahrmanövers basieren. Das Empfangen der Nachricht über das Akzeptieren des kooperativen Fahrmanövers kann es dem Fahrzeug ermöglichen, mit dem akzeptierenden Fahrzeug das kooperative Fahrmanöver durchzuführen. Das Berechnen der Übertragungsparameter basierend auf der Nachricht über das Akzeptieren des kooperativen Fahrmanövers kann ferner eine Anpassung der Senderate (oder beispielsweise ein gezieltes räumliches Senden) ermöglichen, beispielsweise um eine Gesamtzahl von Nachrichten, und damit eine Auslastung der Funkressourcen zu reduzieren.

In einigen Ausführungsbeispielen kann das Verfahren ferner ein Durchführen des kooperativen Fahrmanövers, basierend auf der Fahrintentionsnachricht und basierend auf der Nachricht über das Akzeptieren des kooperativen Fahrmanövers umfassen. Das Durchführen des kooperativen Fahrmanövers kann eine Fahrsicherheit erhöhen und es dem Fahrzeug (oder einem Fahrer des Fahrzeugs) ermöglichen, das Fahrmanöver vereinfacht durchführen zu können.

In zumindest manchen Ausführungsbeispielen kann die Information über die Fahrintention Information über zumindest eine Intention der Gruppe von Einfacher Fahrstreifenwechsel nach links, Einfacher Fahrstreifenwechsel nach rechts, Zweifacher Fahrstreifenwechsel nach links, Zweifacher Fahrstreifenwechsel nach rechts, Dreifacher Fahrstreifenwechsel nach links, Dreifacher Fahrstreifenwechsel nach rechts, Abbiegen nach links, Abbiegen nach rechts, Ausparken und Einparken umfassen. Ein Signalisieren der Fahrintention für Fahrzeuge in einer Umgebung des Fahrzeugs ermöglicht kooperative Fahrmanöver und kann einen Verkehrsfluss verbessern.

In zumindest einigen Ausführungsbeispielen kann das Bestimmen der Fahrintentionsnachricht ferner auf der Position des Fahrzeugs basieren. Die Fahrintentionsnachricht kann ferner Information über die Position des Fahrzeugs und/oder Information über einen aktuell genutzten Fahrstreifen des Fahrzeugs umfassen. Das Bestimmen der Fahrintentionsnachricht basierend auf der Position des Fahrzeugs kann ein Berücksichtigen von Straßenbegebenheiten und/oder eine Einbeziehung von absoluten oder relativen Positionen von Fahrzeugen ermöglichen.

In manchen Ausführungsbeispielen kann das Verfahren ferner ein Berechnen von Information über eine geplante Durchführung des Fahrmanövers, basierend auf der Position des Fahrzeugs umfassen. Die Information über die geplante Durchführung des Fahrmanövers kann Information über zumindest ein Element der Gruppe von erstmöglicher Fahrstreifenwechselpunkt, geplanter Fahrstreifenwechselpunkt, letztmöglicher Fahrstreifenwechselpunkt und Phase des Fahrmanövers umfassen. Die Fahrintentionsnachricht kann ferner die Information über die geplante Durchführung des Fahrmanövers umfassen. Das Bereitstellen der Information über die geplante Durchführung des Fahrmanövers kann eine bessere Koordination des kooperativen Fahrmanövers ermöglichen und/oder den Fahrzeugen in der Umgebung eine Relevanzbeurteilung ermöglichen, d.h. eine Beurteilung dessen, ob die Fahrintentionsnachricht relevant für sie ist.

In Folgenden ist ein beispielhaftes Verfahren für ein Fahrzeug zum Durchführen eines kooperativen Fahrmanövers gezeigt. Das Verfahren umfasst Erhalten einer Fahrintentionsnachricht von einem anfragenden Fahrzeug. Die Fahrintentionsnachricht umfasst Information über eine Intention eines Fahrers oder eines zumindest teilautomatischen Fahrzeugsteuersystems des anfragenden Fahrzeugs, ein Fahrmanöver durchzuführen. Das Verfahren umfasst ferner Erhalten von ein oder mehreren weiteren Fahrintentionsnachrichten von Fahrzeugen in einer Umgebung des Fahrzeugs. Die ein oder mehreren weiteren Fahrintentionsnachrichten umfassen Information über ein oder mehrere Fahrintentionen der Fahrzeuge in einer Umgebung des Fahrzeugs. Das Verfahren umfasst ferner Berechnen des kooperativen Fahrmanövers basierend auf der Fahrintentionsnachricht des anfragenden Fahrzeugs und den ein oder mehreren weiteren Fahrintentionsnachrichten der Fahrzeuge in einer Umgebung des Fahrzeugs. Das Berechnen des kooperativen Fahrmanövers umfasst ein Überprüfen, ob das kooperative Fahrmanöver mit den ein oder mehreren Fahrintentionen der Fahrzeuge in einer Umgebung des Fahrzeugs vereinbar ist. Das Verfahren umfasst ferner Bereitstellen einer Fahrassistenz zum Ausführen des kooperativen Fahrmanövers, falls das kooperative Fahrmanöver mit den ein oder mehreren weiteren Fahrintentionsnachrichten der Fahrzeuge in einer Umgebung des Fahrzeugs vereinbar ist. Das Verfahren kann eine Durchführung des kooperativen Fahrmanövers ermöglichen, beispielsweise unter Einbeziehung möglicher weiterer Fahrintentionsnachrichten weiterer Fahrzeuge, beispielsweise um Fahrmanöver bei einer Unvereinbarkeit mehrerer Fahrintentionen besser koordinieren zu können und/oder um einen Verkehrsfluss zu verbessern

Beispielsweise kann das Verfahren ferner ein Erhalten von Information über eine eigene Fahrintention des Fahrzeugs umfassen. Das Berechnen des kooperativen Fahrmanövers kann ferner auf der Information über die eigene Fahrintention basieren. Das Überprüfen kann ferner überprüfen, ob das kooperative Fahrmanöver mit der eigenen Fahrintention vereinbar ist. Das Bereitstellen kann ferner darauf basiert sein, ob das kooperative Fahrmanöver mit der eigenen Fahrintention vereinbar ist. Das Einbeziehen der eigenen Fahrintention kann eine weitergehende Koordination und Kooperation ermöglichen, beispielsweise indem Fahrmanöver über mehrere Fahrspuren ermöglicht werden.

Beispielsweise kann das Fahrmanöver ein Einfacher Fahrstreifenwechsel nach links sein. Das Berechnen des kooperativen Fahrmanövers kann das kooperative Fahrmanöver so berechnen, dass das kooperative Fahrmanöver einen zweifachen Fahrstreifenwechsel des Fahrzeugs nach links umfasst, falls die eigene Fahrintention des Fahrzeugs einen Fahrstreifenwechsel nach links umfasst, etwa um den Einfachen Fahrstreifenwechsel nach links des anfragenden Fahrzeugs zu ermöglichen. Dabei kann beispielsweise ein Verkehrsfluss erhöht werden und ein Ausbremsen eines oder beider Verkehrsteilnehmer verhindert werden.

Ausführungsbeispiele schaffen ferner eine Vorrichtung für ein Fahrzeug. Die Vorrichtung ist ausgebildet zum Initiieren eines kooperativen Fahrmanövers durch Bereitstellen einer Fahrintentionsnachricht für Fahrzeuge in einer Umgebung des Fahrzeugs. Die Fahrintentionsnachricht umfasst Information über eine Intention eines Fahrers oder eines zumindest teilautomatischen Fahrzeugsteuersystems des Fahrzeugs ein, Fahrmanöver durchzuführen. Die Vorrichtung umfasst eine Schnittstelle, ausgebildet zum Erhalten von Information über eine Fahrintention. Die Fahrintention basiert auf dem Wunsch des Fahrers zum Durchführen des Fahrmanövers. Die Vorrichtung umfasst ferner ein Positionierungsmodul, ausgebildet zum Bestimmen einer Position des Fahrzeugs. Die Vorrichtung umfasst ferner ein Kontrollmodul, ausgebildet zum Steuern der Schnittstelle, des Positionierungsmoduls und einer Fahrzeug-zu-Fahrzeug-Schnittstelle. Das Kontrollmodul ist ferner ausgebildet zum Bestimmen der Fahrintentionsnachricht, basierend auf der Information über die Fahrintention. Das Kontrollmodul ist ferner ausgebildet zum Berechnen von Übertragungsparametern für die Fahrintentionsnachricht. Die Übertragungsparameter umfassen eine Wiederholrate und einen Sendezeitpunkt. Das Kontrollmodul ist ausgebildet, um die Übertragungsparameter basierend auf einer gewünschten Empfangswahrscheinlichkeit der Fahrintentionsnachricht, der Fahrintention und der Position des Fahrzeugs zu berechnen. Das Kontrollmodul ist ferner ausgebildet zum Bereitstellen der Fahrintentionsnachricht als direkte Fahrzeug-zu-Fahrzeug-Nachricht über die Fahrzeug-zu-Fahrzeug-Schnittstelle für die Fahrzeuge in der Umgebung des Fahrzeugs basierend auf den Übertragungsparametern.

Im Folgenden ist ferner eine beispielhafte Vorrichtung für ein Fahrzeug gezeigt, zum Durchführen eines kooperativen Fahrmanövers. Die Vorrichtung umfasst eine Fahrzeug-zu-Fahrzeug-Schnittstelle, ausgebildet zum Erhalten einer Fahrintentionsnachricht von einem anfragenden Fahrzeug. Die Fahrintentionsnachricht umfasst Information über eine Intention eines Fahrers oder eines zumindest teilautomatischen Fahrzeugsteuersystems des anfragenden Fahrzeugs, ein Fahrmanöver durchzuführen. Die Fahrzeug-zu-Fahrzeug-Schnittstelle ist ferner ausgebildet zum Erhalten von ein oder mehreren weiteren Fahrintentionsnachrichten von Fahrzeugen in einer Umgebung des Fahrzeugs. Die ein oder mehreren weiteren Fahrintentionsnachrichten umfassen Information über ein oder mehrere Fahrintentionen der Fahrzeuge in einer Umgebung des Fahrzeugs. Die Vorrichtung umfasst ferner ein Kontrollmodul, ausgebildet zum Steuern der Fahrzeug-zu-Fahrzeug-Schnittstelle und einer Schnittstelle. Das Kontrollmodul ist ferner ausgebildet zum Berechnen des kooperativen Fahrmanövers basierend auf der Fahrintentionsnachricht des anfragenden Fahrzeugs und den ein oder mehreren weiteren Fahrintentionsnachrichten der Fahrzeuge in einer Umgebung des Fahrzeugs. Das Berechnen des kooperativen Fahrmanövers umfasst ein Überprüfen, ob das kooperative Fahrmanöver mit den ein oder mehreren Fahrintentionen der Fahrzeuge in einer Umgebung des Fahrzeugs vereinbar ist. Das Kontrollmodul ist ferner ausgebildet zum Bereitstellen einer Fahrassistenz zum Ausführen des kooperativen Fahrmanövers über die Schnittstelle, falls das kooperative Fahrmanöver mit den ein oder mehreren weiteren Fahrintentionsnachrichten der Fahrzeuge in einer Umgebung des Fahrzeugs vereinbar ist.

Ausführungsbeispiele schaffen ferner ein Fahrzeug, umfassend zumindest eines der Vorrichtungen. Ausführungsbeispiele schaffen ferner ein System, umfassend ein Fahrzeug mit einer Vorrichtung zum Initiieren eines kooperativen Fahrmanövers und ferner umfassend ein weiteres Fahrzeug mit einer Vorrichtung zum Durchführen eines kooperativen Fahrmanövers. Ausführungsbeispiele schaffen ferner ein Programm mit einem Programmcode zum Durchführen zumindest einer der Verfahren wenn der Programmcode auf einem Computer, einem Prozessor, einem Kontrollmodul oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Flussdiagramm eines Ausführungsbeispiels eines Verfahrens zum Initiieren eines kooperativen Fahrmanövers;
- Fig. 1a: illustriert ein Blockdiagramm eines Ausführungsbeispiels einer Vorrichtung zum Initiieren eines kooperativen Fahrmanövers;
- Fig. 1b: illustriert ein Flussdiagramm eines weiteren Ausführungsbeispiels eines Verfahrens zum Initiieren eines kooperativen Fahrmanövers;
- Fig. 2: zeigt ein beispielhaftes Ausführungsbeispiel;
- Fig. 3: illustriert ein Flussdiagramm eines Beispiels eines Verfahrens für ein Fahrzeug zum Durchführen eines kooperativen Fahrmanövers;
- Fig. 3a: illustriert ein Blockdiagramm eines Beispiels einer Vorrichtung für ein Fahrzeug zum Durchführen eines kooperativen Fahrmanövers;
- Fig. 3b: illustriert ein Flussdiagramm eines weiteren Beispiels eines Verfahrens für ein Fahrzeug zum Durchführen eines kooperativen Fahrmanövers; und
- Fign. 4-4b: zeigt ein Beispiel eines Verfahrens zum Durchführen eines kooperativen Fahrmanövers.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Kooperatives Fahren bezeichnet ein Verhalten im Straßenverkehr, bei dem sich die Verkehrsteilnehmer durch geeignete Anpassung des eigenen Fahrverhaltens gegenseitig geplante Manöver ermöglichen, erleichtern oder unterstützen. Kooperation kann beispielsweise zwischen verschiedenen Arten von Fahrzeugen stattfinden (PKW, NFZ, Zweiräder etc.). Bei einem kooperativen Manöver gibt es zwei Rollen: Diejenige des Verkehrsteilnehmers, der um eine Kooperation bittet/eine Kooperation anfordert (auch engl. Request), z.B. Schaffen einer Lücke zum Fahrstreifenwechsel/Einfädeln, und diejenige des Verkehrsteilnehmers, der die Bitte erfüllt/die Anforderung akzeptiert (auch engl. Accept) und z.B. eine geeignete Lücke schafft.

Die Idee von zumindest manchen Ausführungsbeispielen ist es, ergänzend zu den schon standardisierten V2X-Nachrichten (Cooperative Awareness Message (CAM, periodische StatusNachricht des Fahrzeugs), Decentralized Environmental Notification Message (DENM, ereignisbasierte Nachricht), Basic Safety Message (BSM, Elementare Sicherheitsnachricht), Signal Phase and Timing Message (SPAT, Signalphasen und Signalzeitplanungs-Nachricht)) explizite Intentionsnachrichten zu versenden, auf deren Basis das kooperative Verhalten realisiert werden kann. Bei kooperativen Fahrmanövern ist es grundsätzlich hilfreich, wenn die Intention der Fahrzeuge bekannt ist. Unter anderem erleichtert eine Fahrintentionsnachricht den Fahrzeugen, welche potenziell für die Accept-Rolle infrage kommen, die Entscheidung, ob sie auf das Request reagieren sollen (Relevanzbeurteilung) sowie die Durchführung des kooperativen Manövers selbst.

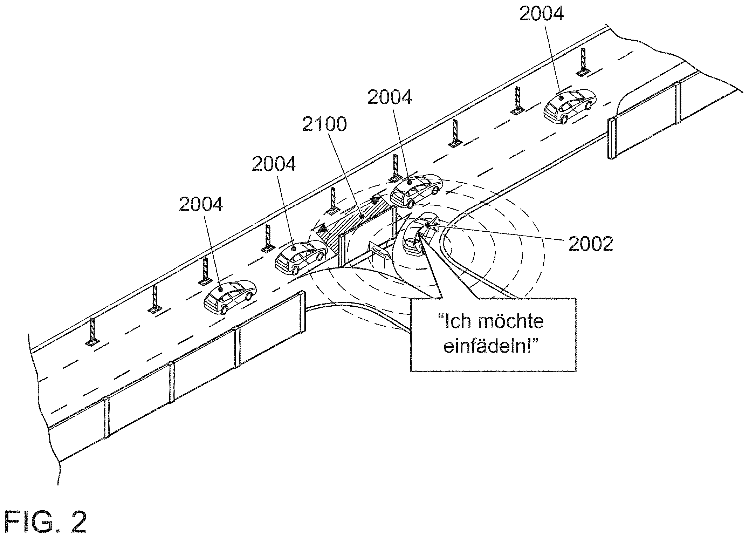

Als Beispiel ist in Fig. 2 ein Fahrzeug 2002 dargestellt, welches auf eine Autobahn auffahren und einfädeln möchte. Dazu versendet es beispielhaft an die Fahrzeuge 2004 in der Umgebung eine Fahrintentionsnachricht, in welcher eine Einfädelabsicht in eine Verkehrslücke 2100 umfasst ist. Die Fahrzeuge 2004 in der Umgebung können ausgebildet sein, um die Fahrintentionsnachricht zu empfangen und ein kooperatives Fahrmanöver basierend auf der Fahrintentionsnachricht aktiv oder passiv zu ermöglichen.

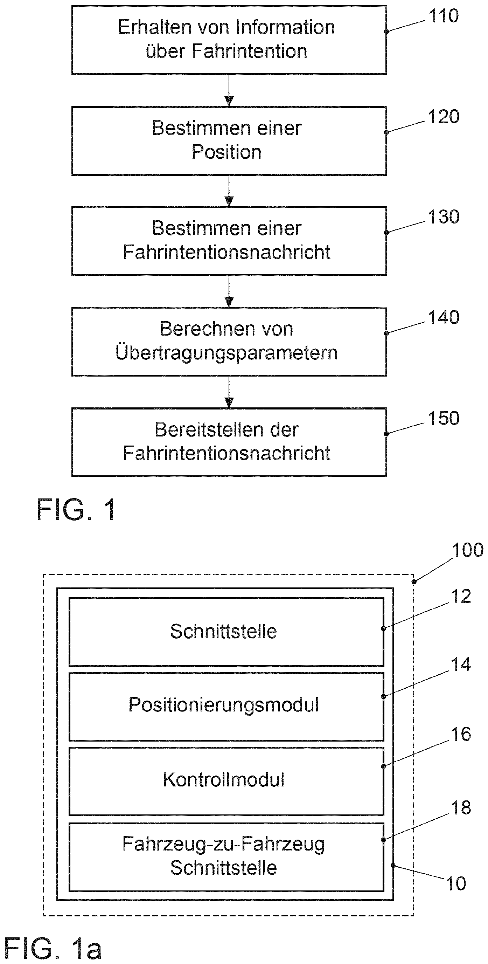

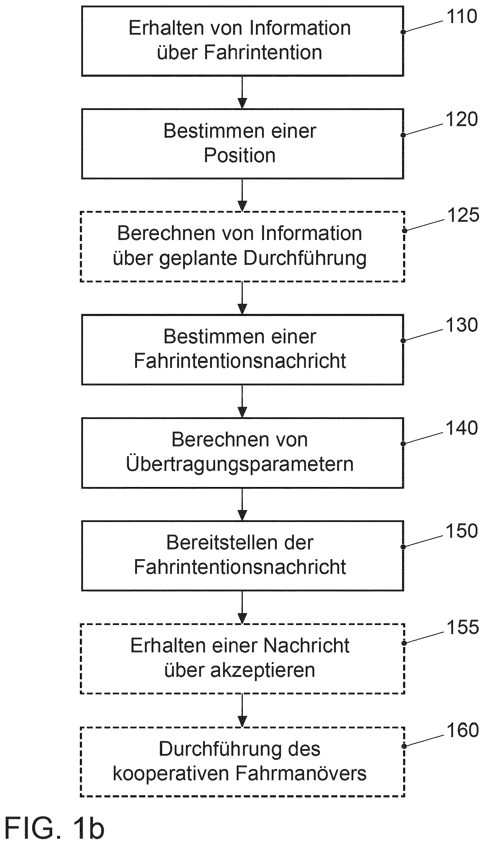

Fig. 1 illustriert ein Flussdiagramm eines Ausführungsbeispiels eines Verfahrens zum Initiieren eines kooperativen Fahrmanövers durch Bereitstellen einer Fahrintentionsnachricht für Fahrzeuge in einer Umgebung eines Fahrzeugs 100. Die Fahrintentionsnachricht umfasst Information über eine Intention eines Fahrers oder eines zumindest teilautomatischen Fahrzeugsteuersystems des Fahrzeugs 100, ein Fahrmanöver durchzuführen. Fig. 1a illustriert ein Blockdiagramm eines Ausführungsbeispiels einer Vorrichtung 10, ausgebildet zum Ausführen des Verfahrens.

In manchen Ausführungsbeispielen kann die Fahrintentionsnachricht Information über eine prognostizierte Trajektorie des prognostizierten Fahrmanövers umfassen, beispielsweise als Zeit-Positions-Angabe oder als Angabe eines Zielbereiches der Fahrintention.
Die Fahrintention kann beispielsweise eine Information über einen zukünftigen Einfädelwunsch, einen zukünftigen Überholwunsch, oder einen zukünftigen Abbiegewunsch des Fahrzeugs 100 umfassen. Fahrintentionen können ferner beispielsweise ein Fahrstreifenwechsel, ein Einfädeln, ein Einparken, ein Ausparken, oder eine Allokation von Straßenfläche für Manöver sein. Beispielsweise kann die Information über die Fahrintention Information über zumindest eine Intention der Gruppe von Einfacher Fahrstreifenwechsel nach links, Einfacher Fahrstreifenwechsel nach rechts, Zweifacher Fahrstreifenwechsel nach links, Zweifacher Fahrstreifenwechsel nach rechts, Dreifacher Fahrstreifenwechsel nach links, Dreifacher Fahrstreifenwechsel nach rechts, Abbiegen nach links, Abbiegen nach rechts, Ausparken und Einparken umfassen. Die Fahrintention kann beispielsweise entsprechend zumindest ein Element der Gruppe von Einfacher Fahrstreifenwechsel nach links, Einfacher Fahrstreifenwechsel nach rechts, Zweifacher Fahrstreifenwechsel nach links, Zweifacher Fahrstreifenwechsel nach rechts, Dreifacher Fahrstreifenwechsel nach links, Dreifacher Fahrstreifenwechsel nach rechts, Abbiegen nach links, Abbiegen nach rechts, Ausparken und Einparken umfassen.

In zumindest manchen Ausführungsbeispielen könnte das Fahrzeug 100 beispielsweise einem Landfahrzeug, einem Straßenfahrzeug, einem Auto, einem Kraftfahrzeug, oder einem Lastkraftfahrzeug entsprechen.

Das zumindest teilautomatische Fahrzeugsteuerungssystem kann beispielsweise einer Steuereinheit eines automatisch fahrenden Fahrzeugs entsprechen, einer Steuereinheit eines Spurwechselassistenten oder einer Steuereinheit eines adaptiven Abstandsregeltempomaten.

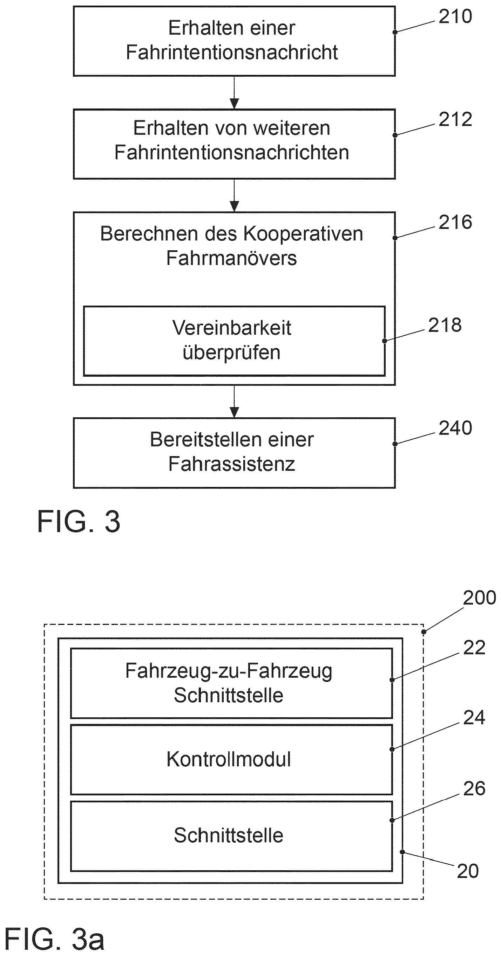

Das Verfahren umfasst Erhalten 110 von Information über eine Fahrintention. Die Fahrintention basiert auf der Intention zum Durchführen des Fahrmanövers. Die Vorrichtung 10 umfasst eine Schnittstelle 12, ausgebildet zum Erhalten 110 der Information über die Fahrintention. Die Schnittstelle 12, und eine Schnittstelle 26 von Fig. 3a, kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Beispielsweise kann die Information über die Fahrintention eine textuelle oder kodierte Repräsentation der Fahrintention umfassen, beispielsweise als Bitvektor, als Bitcode oder als ein oder mehrere kodierte Fahrmanöver. Die Fahrintention kann beispielsweise auf Mustern von Fahrintentionen basieren. Beispielsweise kann beispielsweise einer Repräsentation des Fahrmanövers basierend auf einem Muster entsprechen. Die Information über die Fahrintention kann beispielsweise eine Referenz auf das genutzte Muster und Information über Parameter des Musters, beispielsweise eine Geschwindigkeit, Zielposition etc., umfassen. Beispielsweise können Muster genutzt werden, die den Intentionen entsprechen. Für eine Intention können beispielsweise ein oder mehrere Muster definiert sein. Beispielsweise kann das Erhalten 110 daraus basieren, dass in einem vorgeschalteten Verfahren keine Verkehrslücke zum Ausführen des Fahrmanövers identifiziert wurde.

Das Verfahren umfasst ferner Bestimmen 120 einer Position des Fahrzeugs 100. Die Vorrichtung 10 umfasst ein Positionierungsmodul 14, ausgebildet zum Bestimmen der Position des Fahrzeugs. In Ausführungsbeispielen kann das Positionierungsmodul 14 als beliebige Komponente implementiert sein, die eine Ermittlung oder Bestimmung von Information bzgl. einer Position der Vorrichtung oder des Positionierungsmoduls 14 erlaubt. Denkbar sind beispielsweise Empfänger für satellitengestützte Navigationssysteme, z.B. ein GPS-Empfänger (von engl. Global Positioning System, globales Positionierungssystem), oder auch andere Komponenten, die beispielsweise über Triangulation von empfangen Funksignalen eine Positionsbestimmung zulassen. Die Position des Fahrzeugs 100 kann beispielsweise eine absolute Position des Fahrzeugs 100, etwa als Längen- und Breitenmaß oder als GPS-Koordinate umfassen, oder eine relative Position des Fahrzeugs, beispielsweise relativ zu Koordinaten der digitalen Karte.

Das Verfahren umfasst ferner Bestimmen 130 der Fahrintentionsnachricht, basierend auf der Information über die Fahrintention. Die Fahrintentionsnachricht kann beispielsweise auf einem Kommunikationsprotokoll basieren, beispielsweise auf einem Kommunikationsprotokoll eins Fahrzeug-zu-Fahrzeug-Kommunikationssystems. In manchen Ausführungsbeispielen kann das Bestimmen 130 der Fahrintentionsnachricht ferner auf der Position des Fahrzeugs 100 basieren. Die Fahrintentionsnachricht kann beispielsweise ferner Information über die Position des Fahrzeugs 100 und/oder Information über einen aktuell genutzten Fahrstreifen des Fahrzeugs 100 umfassen. Beispielsweise kann die die Fahrintention ferner basierend auf der Position angepasst werden. Beispielsweise kann das Bestimmen 130 der Fahrintentionsnachricht ferner der Fahrintention eine Position, beispielsweise eine Position relativ zum Fahrzeug 100 oder eine absolute Position zuweisen, an der die Fahrintention beispielsweise als Fahrmanöver ausgeführt werden kann.

In einer beispielhaften Implementierung besitzt die Fahrintentionsnachricht einen Header, welche Kontroll- oder Steuerdaten umfassen können, und Container, die Inhaltsdaten umfassen können, mit Informationen zur Intention (Anfrage-Container, auch engl. Request Container, und Akzeptierungs-Container, auch engl. Accept Container) sowie einen Container mit Informationen zum Manöver selbst (auch engl. Maneuver Information Container). Eine Fahrintentionsnachricht mit einem Request-Container kann beispielsweise der Fahrintentionsnachricht aus Fig. 1 entsprechen, eine Fahrintentionsnachricht mit Accept-Container kann beispielsweise einer Nachricht über ein Akzeptieren des kooperativen Fahrmanövers aus Fig. 1b entsprechen.

Der Header kann eine Protokollversion und einer Nachrichten-Identifikation (auch engl. Message ID), die ähnlich implementiert sein kann wie bei CAM, sowie eine Vorgangs-Identifikation (auch engl. Session ID). Die Session ID kann Mehrdeutigkeiten verhindern und bei einem kooperativen Fahrmanöver die Relevanzfilterung sowie die Manöverplanung erleichtern. Sie kann solange beibehalten werden, bis nach den für das Manöver gültigen Senderegeln keine Nachrichten mehr zum Manöver gesendet werden. Für ein neues Manöver kann eine neue Session ID verwendet werden.

Die Session ID kann beispielsweise nach festgelegten Regeln generiert werden. Diese können beispielsweise so definiert werden, dass in der Umgebung des Manövers keine identischen Session ID verwendet werden (Forderung nach Eindeutigkeit) und dass die Session ID nicht zur Nachverfolgung von Fahrzeugen verwendet werden kann (Forderung nach Privacy), etwa ähnlich wie Pseudonymzertifikate. Der Algorithmus zur Generierung der Session ID könnte beinhalten z.B. das Fahrzeugpseudonym, die Startuhrzeit der Session, eine Zufallszahl und eine Hash-Funktion.

Der Request-Container kann beispielsweise Information über das geplante Manöver (die Fahrintention) in Form eines festgelegten, funktionsabhängigen Schlüssels übermitteln. Der Request-Container kann beispielswese Information über das Fahrmanöver (eine Art des Fahrmanövers umfassen, beispielsweise über einen einfachen Fahrstreifenwechsel nach links, einen einfachen Fahrstreifenwechsel nach rechts, einen zweifachen Fahrstreifenwechsel (Durchscheren) nach links, einen zweifachen Fahrstreifenwechsel (Durchscheren) nach rechts, einen dreifachen Fahrstreifenwechsel (Durchscheren) nach links, einen dreifachen Fahrstreifenwechsel (Durchscheren) nach rechts, ein Abbiegen nach links, ein Abbiegen nach rechts, ein Ausparken und/oder ein Einparken. Ferner kann der Request-Container Information über einen aktuellen Fahrstreifen des Fahrzeugs 100 umfassen, beispielsweise eine Nummer des Fahrstreifens (ist auch Bestandteil CAM und BSM), ob es sich um einen Auffahrt/Beschleunigungsstreifen und/oder eine Bucht/Bushaltstelle handelt, eine Position des Fahrzeugs (ist auch Bestandteil CAM) und/oder eine Länge des Fahrzeugs, etwa die Länge eines Einzelfahrzeugs oder die Länge eines Gespanns.

Der Accept-Container kann beispielsweise Information über das Akzeptieren des kooperativen Fahrmanövers umfassen, Information Art des beabsichtigten Manövers (etwa Schaffen einer Verkehrslücke mit erforderlicher Größe, Fahrstreifenwechsel nach links, Fahrstreifenwechsel nach rechts), und/oder Information über eine Empfangsbestätigung (auch engl. Acknowledge).

In zumindest manchen Ausführungsbeispielen, wie in Fig. 1b gezeigt, kann das Verfahren ferner ein Berechnen 125 von Information über eine geplante Durchführung des Fahrmanövers, basierend auf der Position des Fahrzeugs umfassen. Beispielsweise kann das Berechnen 125 ein Berechnen eines erstmöglichen, eines gewünschten und/oder eines letztmöglichen Zeitpunkts zum Fahrstreifenwechsel umfassen, und eine Voraussage einer voraussichtliche Fahrgeschwindigkeit des Fahrzeugs 100 und einer voraussichtlichen Veränderung von Position den Fahrzeuge in einer Umgebung des Fahrzeugs 100. Die Information über die geplante Durchführung des Fahrmanövers kann beispielsweise Information über zumindest ein Element der Gruppe von erstmöglicher Fahrstreifenwechselpunkt, geplanter Fahrstreifenwechselpunkt, letztmöglicher Fahrstreifenwechselpunkt und Phase des Fahrmanövers. Die Fahrintentionsnachricht kann ferner die Information über die geplante Durchführung des Fahrmanövers umfassen. Beispielsweise kann ein Fahrmanöver ein oder mehrere Phasen umfassen, beispielsweise zumindest ein Element der Gruppe von Planungsphase, Wartephase, ein oder mehrere Teil-Fahrmanöver, und eine Abschlussphase.

Der Maneuver Information Container, der beispielsweise einer Information über eine geplante Durchführung des Fahrmanövers entsprechen kann, kann beispielsweise Information zur geplanten Durchführung des Manövers (bspw. geplanter Fahrstreifenwechselpunkt (Geokoordinaten des berechneten Fahrstreifenwechselpunktes und des berechneten Zeitraumes bis zu diesem Fahrstreifenwechselpunkt)) umfassen, Informationen über die Phasen eines Manövers (Manöverfortschritt), und/oder Randbedingungen des Manövers, welche vom Fahrzeug einzuhalten sind (bspw. erstmöglicher Fahrstreifenwechselpunkt (Geokoordinaten des erstmöglichen Fahrstreifenwechselpunktes und Zeitraum bis zu diesem Fahrstreifenwechselpunkt). "Erstmöglich" bedeutet hier: Frühester Fahrstreifenwechselpunkt aufgrund der baulichen Gegebenheiten), sowie beispielsweise Information über einen Fahrmanöverabbruch.

Entsprechend seiner Rolle in einem kooperativen Fahrmanöver kann ein Fahrzeug den Request oder Accept Container senden. Die Fahrintentionsnachricht kann beispielsweise als eigenständige Nachricht versendet werden oder aber in der Statusnachricht (CAM oder BSM) integriert, wo ein Teil der Informationen schon enthalten sind (z.B. Fahrzeuglänge, Fahrstreifen, Blinkerstatus).

Das Verfahren umfasst ferner Berechnen 140 von Übertragungsparametern für die Fahrintentionsnachricht. Die Übertragungsparameter umfassen eine Wiederholrate und einen Sendezeitpunkt. Das Berechnen 140 der Übertragungsparameter kann beispielsweise auf einer gewünschten Empfangswahrscheinlichkeit der Fahrintentionsnachricht, der Fahrintention und der Position des Fahrzeugs. Beispielsweise kann das Berechnen 140 ein Erhalten von Information über ortsabhängige Übertragungsparameter umfassen. Die Information über die ortsabhängigen Übertragungsparameter kann beispielsweise auf zumindest einem Element der Gruppe von Signalstärke, Empfangssignalstärke, Fehlerrate, Übertragungswahrscheinlichkeit, Empfangswahrscheinlichkeit, Information über einen Einfluss einer Streckenführung auf die direkte Fahrzeug-zu-Fahrzeug-Kommunikation, Information über statische und/oder mobile Hindernisse für eine direkte Fahrzeug-zu-Fahrzeug-Kommunikation zwischen verschiedenen Punkten auf einer Wegstrecke basieren und/oder zumindest ein Element der Gruppe umfassen. In zumindest manchen Ausführungsbeispielen kann die Information über die ortsabhängigen Übertragungsparameter ein oder mehrere Sätze/Gruppen von Übertragungsparameter umfassen, beispielsweise Einstellungen für Sende-Empfangseinheiten, etwa zur Sendeverstärkung oder einer Vorverzerrung, und/oder Einstellungen auf Protokollebene, die beispielsweise eine Wiederholrate anzeigen. Alternativ oder zusätzlich kann die Information über die ortsabhängigen Übertragungsparameter Messergebnisse von empfangenen Signalen oder Daten, die auf ein oder mehreren Sätzen von Sende-Parametern basieren, umfassen. Basierend auf der Information über die ortsabhängigen Übertragungsparameter kann das Berechnen 140 Übertragungsparameter für die aktuelle Position des Fahrzeugs bestimmen.

Beispielsweise kann das Berechnen 140 der Übertragungsparameter ferner auf der Fahrintention basieren: Beispielsweise können unterschiedliche Fahrintentionen unterschiedliche Übertragungsparameter bedingen. Beispielsweise kann das Berechnen 140 darauf basieren, in welche Richtung bei einer Fahrintention Fahrzeuge in der Umgebung sich befinden können, für die die Fahrintention relevant ist, etwa wenn das Fahrzeug 100 (etwa durch die Fahrzeug-zu-Fahrzeug-Schnittstelle 18) ausgebildet ist, die Fahrintentionsnachricht zielgerichtet bereitzustellen.

Beispielsweise kann das Berechnen 140 die Widerholrate für die Übertragungsparameter berechnen. Für die Widerholrate der Intentionsnachricht kann beispielsweise
1. ein fester Wert festgelegt werden (etwa wie bei BSM) oder
2. die Senderate dynamisch angepasst werden (etwa wie bei CAM). Bei der dynamischen Anpassung kann dies
   a. angelehnt an den CAM-Standard erfolgen oder
   b. es werden für das Versenden einer Intentionsnachricht eigene Regeln verwendet.

In einer bevorzugten Ausführung kann die Wiederholrate der Intentionsnachrichten dynamisch durch das Berechnen 140 so festgelegt werden, dass in einer festgelegten Entfernung eine zu definierende Mindestempfangswahrscheinlichkeit der Intentionsnachrichten erreicht wird. Mit zunehmender Wiederholrate nimmt die Empfangswahrscheinlichkeit meist zu, da es sich um eine kumulative Empfangswahrscheinlichkeit handelt.

Die zu definierende Entfernung kann beispielsweise so gewählt werden, dass die potenziell kooperierenden Verkehrsteilnehmer Intentionsnachrichten so frühzeitig erhalten, dass eine Relevanzbeurteilung und das Durchführen des kooperativen Manövers möglich ist. Daher kann die zu einer festzulegenden Empfangswahrscheinlichkeit (z.B. 99 %) gehörende Entfernung abhängig von der Art der Intention (z.B. Einfädeln, Parken), vom kooperativen Manöver (Fahrstreifenwechsel, Verzögerung), von der Verkehrssituation (z.B. Tempo-30-Zone innerorts, Autobahn ohne Geschwindigkeitsbeschränkung), von der Verkehrsdichte, u.a. sein. Das Berechnen 140 der Übertragungsparameter kann beispielsweise auf zumindest einem Element der Gruppe von Art der Intention, Art des kooperativen Manövers, Verkehrssituation, und Verkehrsdichte basieren.

Die Wahrscheinlichkeit, mit der vom Fahrzeug 100 gesendete Intentionsnachrichten (und anderen Arten von Nachrichten) in einer bestimmten Entfernung von anderen Verkehrsteilnehmern empfangen werden, ist häufig ortsabhängig (Abschattung durch Gebäude, Hügel, Wald, etc.). Sie kann beispielsweise aus eine Beobachtung des Funkkanals geschätzt werden oder auf ortsabhängigen Übertragungsparametern basieren. Die Empfangswahrscheinlichkeit kann beispielsweise messtechnisch ermittelt und aus einer digitalen Karte vorliegen, beispielsweise umfasst in der Information über die ortsabhängigen Übertragungsparameter.

In einer weiteren bevorzugten Ausführung wird die Wiederholrate der Intentionsnachrichten dynamisch an den Ablauf des Kooperationsmanövers angepasst. Wenn sich zwei Kooperationspartner für ein kooperatives Manöver gefunden haben und eine Request-Fahrintentionsnachricht bereitgestellt 150 (Fig. 1) wurde und eine Nachricht über ein Akzeptieren des kooperativen Fahrmanövers empfangen 155 (Fig. 1b) wurde (Accept-Fahrintentionsnachricht), kann die Wiederholrate der Intentionsnachrichten beispielsweise reduziert werden, wenn sich die Kooperationspartner in räumlicher Nähe zueinander befinden. Beispielsweise kann an einer Autobahnauffahrt, wenn die Kooperationspartner noch weit voneinander entfernt sind, die Wiederholrate höher sein. Wenn der Einschervorgang stattfindet und die Kooperationspartner quasi schon fast hintereinander fahren, kann die Wiederholrate geringer sein. Die Reduzierung der Wiederholrate kann beispielsweise ortsabhängige oder distanzabhängig nach einem festgelegten Algorithmus stattfinden, in den in einer bevorzugten Ausführung die Entfernung und die Relativgeschwindigkeiten der Kooperationspartner eingehen, z.B. lineare Reduzierung der Wiederholrate vom Startwert auf einen festzulegenden Wert (z.B. 2 Hz).

Eine Gültigkeitszeit einer Fahrintentionsnachricht kann beispielsweise bei Erhalt einer weiteren Fahrintentionsnachricht mit derselben Session ID enden, oder falls nach einer festgelegten Lebensdauer keine weitere Nachricht empfangen wird (der Wert kann beispielsweise abhängig von der Senderate sein).

Das Verfahren umfasst ferner Bereitstellen 150 der Fahrintentionsnachricht als direkte Fahrzeug-zu-Fahrzeug-Nachricht für die Fahrzeuge in der Umgebung des Fahrzeugs 100 basierend auf den Übertragungsparametern.

Die Vorrichtung 10 umfasst ein Kontrollmodul 16, ausgebildet zum Steuern der Schnittstelle 12, des Positionierungsmoduls 14 und einer Fahrzeug-zu-Fahrzeug-Schnittstelle 18. Das Kontrollmodul 16 ist ausgebildet zum Bestimmen 130 der Fahrintentionsnachricht, basierend auf der Information über die Fahrintention, zum Berechnen 140 der Übertragungsparameter und zum Bereitstellen 150 der Fahrintentionsnachricht über die Fahrzeug-zu-Fahrzeug-Schnittstelle 18. Das Kontrollmodul 16 ist gekoppelt mit der Schnittstelle 12, dem Positionierungsmodul 14 und der Fahrzeug-zu-Fahrzeug-Schnittstelle 18. In zumindest manchen Ausführungsbeispielen kann das Kontrollmodul 16 ausgebildet sein, um die Verfahrensschritte 110-160 auszuführen, beispielsweise mit Hilfe der Schnittstelle 12, des Positionierungsmoduls 14 und/oder der Fahrzeug-zu-Fahrzeug-Schnittstelle 18.

In Ausführungsbeispielen kann die Kontrolleinrichtung bzw. das Kontrollmodul 16, und ein Kontrollmodul 24 aus Fig. 3a, einem beliebigen Controller oder Prozessor oder einer programmierbaren Hardwarekomponente entsprechen. Beispielsweise kann das Kontroll-Modul 16; 24 auch als Software realisiert sein, die für eine entsprechende Hardwarekomponente programmiert ist. Insofern kann das Kontrollmodul 16; 24 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 16; 24 denkbar.

Eine direkte Fahrzeug-zu-Fahrzeug-Kommunikation zum Bereitstellen 150 der Fahrintentionsnachricht kann beispielsweise über eine Fahrzeug-zu-Fahrzeug-Schnittstelle, etwa die Fahrzeug-zu-Fahrzeug-Schnittstelle 18 der Vorrichtung 10 durchgeführt werden. Das Bereitstellen 150 der Fahrintentionsnachricht kann beispielsweise über einen geteilten Kommunikationskanal stattfinden (auch engl. shared channel, broadcast channel). In einigen Ausführungsbeispielen kann das Bereitstellen 150 über eine direkte Fahrzeug-zu-Fahrzeug-Kommunikation mittels einer direkten drahtlosen Kommunikationsverbindung zwischen zwei Fahrzeugen, beispielsweise ohne den Einsatz einer Basisstation, durchgeführt werden, etwa gemäß IEEE 802.11p (einem Standard des Institute of Electrical and Electronics Engineers, Institut für Elektroingenieure). Die Fahrzeug-zu-Fahrzeug-Schnittstelle 18 und eine Fahrzeug-zu-Fahrzeug-Schnittstelle 22 aus Fig. 3a, kann beispielsweise ausgebildet sein, drahtlos direkt mit weiteren Fahrzeugen in einer Umgebung zu kommunizieren. Die Fahrzeug-zu-Fahrzeug-Schnittstelle 18;22 kann beispielsweise zu einer direkten Fahrzeug-zu-Fahrzeug-Kommunikation ausgebildet sein, und ein oder mehrere Eingänge und/oder ein oder mehreren Ausgänge zum Empfangen und/oder Übertragen von Informationen umfassen, etwa in digitalen Bitwerten, zwischen verschiedenen Fahrzeugen. Alternativ oder zusätzlich kann die Fahrzeug-zu-Fahrzeug-Schnittstelle 18; 22 ausgebildet sein, um eine Fahrzeugleuchte, beispielsweise eine in Fahrtrichtung oder eine gegen die Fahrtrichtung gerichtete Fahrzeugleuchte (Fronscheinwerfer, Tagfahrlicht für vorausfahrenden Verkehr und Rücklichter für rückwärtigen Verkehr), zu nutzen, um durch auf den Lichtstrom aufmodulierte Informationen eine Fahrzeug-zu-Fahrzeug-Kommunikation bereitzustellen. Als Empfänger sind Kamerasysteme im Front/Heckbereich oder entsprechende Lichtsensoren vorstellbar.

Das Bereitstellen 150 kann beispielsweise der Beginn des im Folgenden beschriebenen beispielhaften Kommunikationsprotokolls sein.

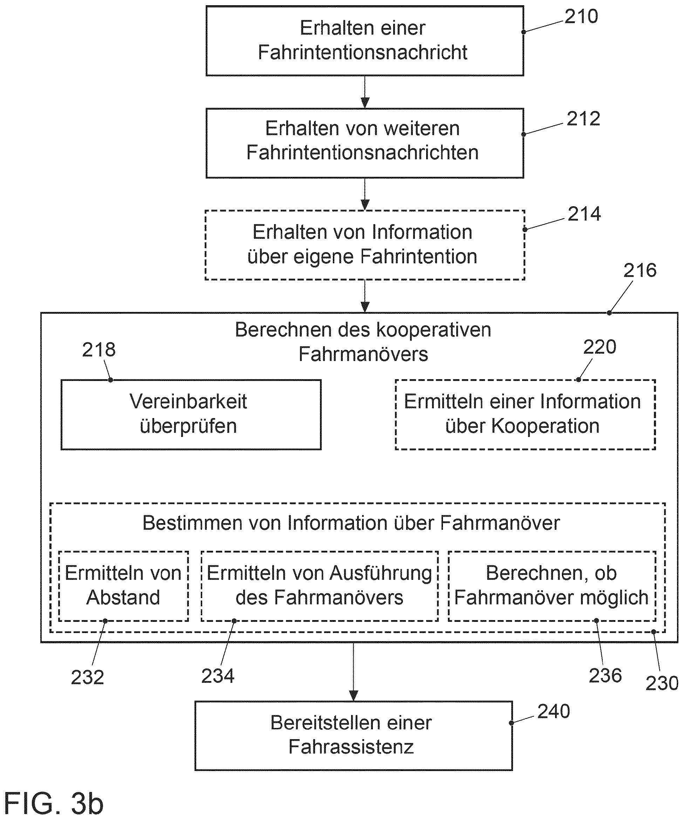

Eine Request-Fahrintentionsnachricht kann der Fahrintentionsnachricht aus Fig. 1 und/oder Fig.3 entsprechen. Sind entsprechende Auslöser-Bedingungen erfüllt, kann das Fahrzeug, welches eine Kooperation anfragt, etwa ein anfragendes Fahrzeug 100 aus Fig. 1 oder 3, eine Request-Fahrintentionsnachricht mit einem befülltem Request-Container und Fahrmanöver-Container (optional) sowie einem leerem Accept-Container zu versenden. Die Fahrintentionsnachricht kann beispielsweise
1. bis zum Abschluss des kooperativen Fahrmanövers gesendet werden oder
2. falls keines zustande kommt bis eine Kooperation nicht mehr relevant ist gesendet werden, z.B. weil das beabsichtigte Manöver inzwischen ohne Kooperationspartner ausgeführt werden kann.

In manchen Ausführungsbeispielen kann das Verfahren, wie in Fig. 1b gezeigt, ferner ein Empfangen 155 einer Nachricht über ein Akzeptieren des kooperativen Fahrmanövers, als Antwort auf die Fahrintentionsnachricht, von zumindest einem der Fahrzeuge in der Umgebung des Fahrzeugs umfassen, beispielsweise durch das Kontrollmodul 16 über die Fahrzeug-zu-Fahrzeug-Schnittstelle 18. Die Nachricht über das Akzeptieren des kooperativen Fahrmanövers kann beispielsweise anzeigen, dass zumindest ein Fahrzeug bereit ist, das kooperative Fahrmanöver durchzuführen. Das Berechnen 140 der Übertragungsparameter kann ferner auf der Nachricht über das Akzeptieren des kooperativen Fahrmanövers basieren. Beispielsweise können die Übertragungsparameter auf einer Position oder eine Identifikation eines Fahrzeugs, das die Nachricht über das Akzeptieren bereitgestellt hat, basieren. Beispielsweise kann das Verfahren ferner ein Bestimmen einer Entfernung des zumindest einen Fahrzeugs oder von dessen Position umfassen, und diese genutzt werden, um eine Wiederholrate, eine Sendeleistung oder eine Senderichtung über die Übertragungsparameter anzupassen.

Es kann in manchen Fällen sinnvoll sein, eine direkte Absprache der Kooperationspartner zur Absicherung des Fahrmanövers durchzuführen. In diesem Fall könnte eine mögliche Reaktion des Fahrzeugs 100 auf die Nachricht über das Akzeptieren des kooperativen Fahrmanövers des kooperierenden Fahrzeugs eine Bestätigungsnachricht (auch engl. Acknowledge) sein. Das Kontrollmodul 16 kann ausgebildet sein, zusätzlich zum Request-Container einen Accept-Container mit der Bestätigungsnachricht zu schicken. Dies kann beispielsweise so lange durchgeführt werden, wie Request-Container gesendet werden.

Es ist denkbar, dass Situationen eintreten, die einen Abbruch des geplanten kooperativen Manövers erforderlich machen, z.B. Vorderfahrzeuge des Accept-Fahrzeuges zwingen dieses zum Bremsen und die geplante Lücke kann von ihm nicht erzeugt werden. In diesem Fall kann das Accept-Fahrzeug ausgebildet sein, um das Senden von Nachricht über ein Akzeptieren des kooperativen Fahrmanövers einzustellen, oder Intentionsnachrichten mit leerem Accept-Container und der Information Abbruch im Maneuver-Information-Container bereitzustellen. Die Abbruch-Intentionsnachricht kann beispielsweise mit einer festgelegten Anzahl von Wiederholungen gesendet werden (z.B. 5 mal). Danach wird vom Accept-Fahrzeug in manchen Ausführungsbeispielen keine Nachricht über ein Akzeptieren des kooperativen Fahrmanövers mehr gesendet.

Im Fall dass das Fahrzeug 100 das geplante kooperative Manöver nicht mehr durchführen will oder kann, kann das Kontrollmodul 16 beispielsweise ausgebildet sein, um das Bereitstellen von Fahrintentionsnachrichten einzustellen oder eine Manöverabbruchnachricht mit der festgelegten Anzahl von Wiederholungen bereitzustellen.

In zumindest einigen Ausführungsbeispielen kann das Verfahren ferner ein Durchführen 160 des kooperativen Fahrmanövers, etwa basierend auf der Fahrintentionsnachricht und basierend auf der Nachricht über das Akzeptieren des kooperativen Fahrmanövers. Das Durchführen 160 kann beispielsweise zumindest ein Element der Gruppen von Bereitstellen eines Geschwindigkeits-Zeit-Verlaufs für einen adaptiven Abstandsregeltempomaten, ein Bereitstellen einer Längs- und/oder Querregelhilfe, ein Auslösen eines automatisierten Fahrstreifenwechsels, und ein Bereitstellen von Parametern für ein zumindest teilweise automatisches Fahrsteuersystem umfassen.

Das Durchführen 160 kann ferner ein Bereitstellen eines Steuersignals zum Steuern der Brems-, Beschleunigungs- oder Fahrstreifenwechselfunktionalität umfassen, beispielsweise über eine Schnittstelle, etwa einen Kontroll-Netzwerk-Bus (auch engl. Controller Area Network Bus, CAN Bus) des Fahrzeugs 100.

Das Durchführen 160 kann beispielsweise einem automatisierten Ausführen des Fahrmanövers entsprechen, beispielsweise über ein Fahrassistenzsystem oder durch Anpassung eines automatisch fahrenden Fahrzeugs. Alternativ oder zusätzlich kann das Durchführen 160 einem Bereitstellen von Hinweisen zur Durchführung des Fahrmanövers für einen Fahrer des Fahrzeugs 100 über eine Mensch-Maschine-Schnittstelle entsprechen. Die Mensch-Maschine-Schnittstelle kann beispielsweise einem Bildschirm, einem Projektor oder einem Tonausgabemodul entsprechen. Die Hinweise können beispielsweise gesprochenen Anweisungen, Tonsignalen und/oder visuellen Darstellung der Hinweise entsprechen.

In manchen Ausführungsbeispielen kann das Durchführen 160 ferner ein Längsregeln und/oder ein Querregeln umfassen, basierend auf der Fahrintentionsnachrichten und Statusnachrichten des zumindest einen weiteren Fahrzeugs, Umfeldinformationen der zumindest einen weiteren Fahrzeugs und/oder Sensordaten des Fahrzeugs 100.

Fig. 3 illustriert ein Flussdiagramm eines Ausführungsbeispiels eines Verfahrens für ein Fahrzeug 200 zum Durchführen eines kooperativen Fahrmanövers. Fig. 3a illustriert ein Blockdiagramm eines Ausführungsbeispiels einer Vorrichtung 20 für das Fahrzeug 200 zum Durchführen des kooperativen Fahrmanövers, ausgebildet zum Ausführen des Verfahrens.

Das Verfahren umfasst Erhalten 210 einer Fahrintentionsnachricht von einem anfragenden Fahrzeug 100. Die Fahrintentionsnachricht umfasst Information über eine Intention eines Fahrers oder eines zumindest teilautomatischen Fahrzeugsteuersystems des anfragenden Fahrzeugs 100, ein Fahrmanöver durchzuführen. Das Empfangen 210 kann beispielsweise mittels Fahrzeug-zu-Fahrzeug-Kommunikation erfolgen, beispielsweise über eine Fahrzeug-zu-Fahrzeug-Schnittstelle 22 der Vorrichtung 20, die ausgebildet ist zur Fahrzeug-zu-Fahrzeug-Kommunikation. Die Vorrichtung umfasst ferner ein Kontrollmodul 24, ausgebildet zum Empfangen 210 über die Fahrzeug-zu-Fahrzeug-Schnittstelle 22. Die Fahrzeug-zu-Fahrzeug-Schnittstelle 22 ist mit dem Kontrollmodul 24 gekoppelt. Die Vorrichtung umfasst ferner eine Schnittstelle 26, die mit dem Kontrollmodul 24 gekoppelt ist.

Das Verfahren umfasst ferner Erhalten 212 von ein oder mehreren weiteren Fahrintentionsnachrichten von Fahrzeugen in einer Umgebung des Fahrzeugs 200. Die ein oder mehreren weiteren Fahrintentionsnachrichten umfassen Information über ein oder mehrere Fahrintentionen der Fahrzeuge in einer Umgebung des Fahrzeugs 200. Die Fahrintentionsnachrichten können beispielsweise ähnlich der Fahrintentionsnachricht des anfragenden Fahrzeugs 100 implementiert sein. Das Kontrollmodul 24 ist ausgebildet zum Erhalten 212 über die Fahrzeug-zu-Fahrzeug-Schnittstelle 22.

Das Verfahren umfasst ferner Berechnen 216 des kooperativen Fahrmanövers basierend auf der Fahrintentionsnachricht des anfragenden Fahrzeugs 100 und den ein oder mehreren weiteren Fahrintentionsnachrichten der Fahrzeuge in einer Umgebung des Fahrzeugs 200. Das Kontrollmodul 24 ist ausgebildet zum Berechnen 16. Das Berechnen 216 umfasst ein Überprüfen 218, ob das kooperative Fahrmanöver mit den ein oder mehreren Fahrintentionen der Fahrzeuge in einer Umgebung des Fahrzeugs 200 vereinbar ist. Beispielsweise kann das Berechnen 218 überprüfen, ob ein möglicher Fahrstreifenwechselpunkt mit den ein oder mehreren Fahrintentionen vereinbar ist, die in einigen Ausführungsbeispielen bereits durchgeführt werden können. Beispielsweise kann dies auf einer Information über den Fortschritt des Fahrmanövers (Phase) basieren. In manchen Ausführungsbeispielen kann das Überprüfen 218 ferner auf Sensordaten des Fahrzeugs 200 basieren. Das Überprüfen 218 kann ferner ein Erfassen einer Verkehrssituation, basierend auf den Sensordaten, umfassen. Das Überprüfen 218 kann ferner überprüfen, ob das geplante Fahrmanöver mit der Verkehrssituation vereinbar ist. Die Sensordaten können beispielsweise Kamerasensordaten, Radar-Sensordaten, Lidar-Sensordaten oder Laufzeitsensordaten umfassen.

In manchen Ausführungsbeispielen kann das Berechnen 216 beispielsweise ein Ermitteln 220 einer Information über eine Kooperation in einem kooperativen Fahrmanöver mit dem anfragenden Fahrzeug 100 umfassen. Die Information über die Kooperation kann anzeigen, ob das Fahrzeug 200 als Kooperationspartner infrage kommt und ob ein kooperatives Verhalten unter Berücksichtigung der verkehrlichen Situation möglich ist, basierend auf der Fahrintentionsnachricht. In manchen Ausführungsbeispielen kann ferner geprüft/angezeigt werden, ob das kooperative Verhalten basierend auf weiteren Restriktionen möglich ist.

Das Ermitteln 220 kann als Relevanzbeurteilung beispielsweise in mehreren Schritten prüfen, ob das empfangende Fahrzeug als Kooperationspartner prinzipiell infrage kommt und ob ein kooperatives Verhalten unter Berücksichtigung der verkehrlichen Situation sowie weiterer Restriktionen möglich ist. Diese Restriktionen ergeben sich beispielsweise durch die Grenzen der Bereitschaft des Fahrers zur Kooperation und durch andere Ziele, wie ein effizientes Fahren. Beispielsweise kann das Ermitteln 220 auf Information über ein Fahrverhalten eines Fahrers des Fahrzeugs 200 basieren. Das Verfahren kann ferner ein Bestimmen der Information über das Fahrverhalten umfassen, beispielsweise zum Bestimmen einer Fahrdynamik oder einer Überholwahrscheinlichkeit des Fahrers.

Beispielsweise könnte vom Fahrer die maximal zulässige Verzögerung bei der Vergrößerung von Lücken durch die Information über das Fahrverhalten vorgegeben werden. Diese könnte das Bestimmen der Fahrdynamik von seinem Fahrerlebnis ableiten, entsprechend der Möglichkeit bei einem ACC den Abstand zum Vorderfahrzeug in bestimmten Grenzen zu konfigurieren. Auch könnte bestimmt werden, ob Fahrstreifenwechsel für ein kooperatives Manöver in Betracht gezogen werden dürfen oder nicht.

In manchen Ausführungsbeispielen kann das Berechnen 216 beispielsweise ferner ein Bestimmen 230 von Information über ein Fahrmanöver für eine Manöverplanung umfassen. Die Information über das Fahrmanöver kann beispielsweise eine Trajektorie eines Fahrmanövers, beispielsweise als Zeit-Positions-Kette umfassen. Die Manöverplanung findet in zumindest manchen Ausführungsbeispielen ebenfalls in mehreren Schritten stattfinden. Das Bestimmen 230 kann beispielsweise ein Ermitteln 232 von Information über zumindest einen Abstand zu einem Vorderfahrzeug und/oder einem Hinterfahrzeug umfassen um ein Berechnen, ob dem Fahrstreifenwechselwunsch in einem möglichen Kooperationsbereich entsprochen werden kann, zu ermöglichen. Das Bestimmen kann beispielsweise Ermitteln, inwieweit der Abstand zu seinem Vorderfahrzeug und gegebenenfalls auch zu seinem Hinterfahrzeug bei der aktuell gefahrenen Geschwindigkeit für ein Fahrstreifenwechselmanöver angepasst werden kann. Wird die Länge des Request-Fahrzeugs (und eventueller Anhänger, Auflieger, o.ä.) übermittelt, etwa in der Fahrintentionsnachricht oder durch Status-Nachrichten des Request-Fahrzeugs, kann diese in manchen Ausführungsbeispielen berücksichtigt werden.

Das Bestimmen 230 umfasst in manchen Ausführungsbeispielen ferner Ermitteln 234 einer Ausführung des Fahrmanövers, basierend auf der Information über das Fahrmanöver, der Information über den zumindest einen Abstand, einer Geschwindigkeit des Fahrzeugs 205 und einer Entfernung zum möglichen Kooperationsbereich. Auf Basis des Ergebnisses der vorangegangenen Schritte kann das Ermitteln 234 unter Berücksichtigung seiner Geschwindigkeit und Entfernung zum möglichen Kooperationsbereich ermitteln, welche Ausführung des Fahrmanövers (z.B. Verzögerung-Zeit-Verlauf) für die Kooperation erforderlich wäre.

Das Bestimmen 230 umfasst ferner in manchen Ausführungsbeispielen Berechnen 236, ob das Fahrmanöver unter Berücksichtigung der verkehrlichen Situation (und beispielsweise weiterer Restriktionen) möglich ist. Bei negativem Prüfungsergebnis kann ein Abbruch der Manöverplanung erfolgen.

Das Verfahren umfasst ferner Bereitstellen 240 einer Fahrassistenz zum Ausführen des kooperativen Fahrmanövers über die Schnittstelle 26, falls das kooperative Fahrmanöver mit den ein oder mehreren weiteren Fahrintentionsnachrichten der Fahrzeuge in einer Umgebung des Fahrzeugs 200 vereinbar ist.

Das Bereitstellen 240 der Fahrassistenz kann beispielsweise einem automatisierten Ausführen des Fahrmanövers entsprechen, beispielsweise über ein Fahrassistenzsystem oder durch Anpassung eines automatisch fahrenden Fahrzeugs. Alternativ oder zusätzlich kann das Bereitstellen 240 der Fahrassistenz einem Bereitstellen von Hinweisen zur Durchführung des Fahrmanövers für einen Fahrer des Fahrzeugs 240 über eine Mensch-Maschine-Schnittstelle entsprechen. Die Mensch-Maschine-Schnittstelle kann beispielsweise einem Bildschirm, einem Projektor oder einem Tonausgabemodul entsprechen. Die Vorrichtung 20 kann beispielsweise die Mensch-Maschine-Schnittstelle umfassen. Die Hinweise können beispielsweise gesprochenen Anweisungen, Tonsignalen und/oder visuellen Darstellung der Hinweise entsprechen.

In manchen Ausführungsbeispielen kann das Bereitstellen 240 ferner ein Längsregeln und/oder ein Querregeln umfassen, basierend auf der Fahrintentionsnachrichten und Statusnachrichten des zumindest einen weiteren Fahrzeugs, Umfeldinformationen der zumindest einen weiteren Fahrzeugs und/oder Sensordaten des Fahrzeugs 200.

Je nach Automatisierungsgrad kann das Fahrzeug 200 das geplante Manöver automatisiert durchführen, das Bereitstellen 240 kann ebenfalls den Fahrer über ein geeignetes HMI informieren, oder es kann bei einem manuellen Betreib des Fahrzeugs den Fahrer zur Durchführung des kooperativen Manövers auffordern. Dazu kann es geeignete Hinweise über ein entsprechendes HMI bereitstellen 240.

Das Bereitstellen 240 kann ferner ein Bereitstellen einer Nachricht über ein Akzeptieren des Fahrstreifenwechselwunschs für das anfragende Fahrzeug 100 und das zumindest eine weitere Fahrzeug 200 umfassen (Accept-Nachricht).

Fahrzeuge, welche Request-Intentionsnachrichten erhalten, können beispielsweise eine Relevanzbeurteilung durchführen, etwa durch Ermitteln 220 einer Information über eine Kooperation in einem kooperativen Fahrmanöver. Beurteilt kann beispielsweise werden, ob sie als potentielle Kooperationspartner infrage kommen. Kriterien sind beispielsweise, ob sie sich auf dem betroffenen Fahrstreifen befinden, ob kooperative Manöver für sie überhaupt möglich sind usw. Bei einer negativen Relevanzbeurteilung kann die empfangene Request-Nachricht verworfen und weitere Request-Nachrichten mit dieser Session ID ignoriert werden. Es erfolgt dann in manchen Fällen keine Reaktion auf das Request (keine Antwort).

Bei positiver Relevanzbeurteilung kann eine Durchführbarkeitsprüfung durchgeführt werden, etwa durch Bestimmen (230) von Information über ein Fahrmanöver (Fig. 3b). Es kann in manchen Ausführungsbeispielen überprüft werden, dass
1. nicht schon ein anderes Fahrzeug eine Accept-Intentionsnachricht mit dieser Session ID sendet (Eindeutigkeit der beteiligten Kooperationspartner) und
2. keine Konflikte mit anderen schon geplanten kooperativen Manövern (mit anderer Session ID) auftreten. Dies erfordert unter anderem eine Analyse der räumlichen Anordnung der verschiedenen Kooperationspaare zueinander und eine Prüfung, ob die "Choreografie" der Kooperationsvorgänge kollisionsfrei möglich ist.
Bei positiver Durchführbarkeitsprüfung kann eine Intentionsnachricht mit Accept-Container versendet werden, welche das Accept und die Art des beabsichtigten Manövers umfassen kann (Lücke mit erforderlicher Größe schaffen, Fahrstreifenwechsel). Die Accept-Intentionsnachricht wird in manchen Ausführungsbeispielen gesendet
1. bis zum Abschluss des kooperativen Manövers oder
2. bis zum Abbruch des kooperativen Manövers
Aus Gründen der Eindeutigkeit kann von einem Fahrzeug in einigen Ausführungsbeispielen nur ein kooperatives Manöver bearbeitet werden. Das Kontrollmodul 24 kann beispielsweise ausgebildet sein, nicht zur gleichen Zeit Accept-Intentionsnachrichten zu mehr als einer Session zu senden.

In manchen Ausführungsbeispielen, wie in Fig. 3b gezeigt, kann das Verfahren ferner Erhalten 214 von Information über eine eigene Fahrintention des Fahrzeugs 200 umfassen. Dies kann beispielsweise ähnlich implementiert sein wie das Erhalten 110. Das Berechnen 216 kann ferner auf der Information über die eigene Fahrintention basieren, beispielsweise kann die eigene Fahrintention analog zu den ein oder mehreren weiteren Fahrintentionen genutzt werden. Das Überprüfen kann 218 alternativ oder zusätzlich zum Prüfen einer Vereinbarkeit der Fahrintentionen der Fahrintentionsnachricht und der weiteren Fahrintentionsnachrichten überprüfen, ob das kooperative Fahrmanöver mit der eigenen Fahrintention vereinbar ist. Das Bereitstellen 240 kann ferner darauf basiert sein, ob das kooperative Fahrmanöver mit der eigenen Fahrintention vereinbar ist.

In einem beispielhaften Ausführungsbeispiel kann das Fahrmanöver ein Einfacher Fahrstreifenwechsel nach links sein. Falls die eigene Fahrintention des Fahrzeugs 200 einen Fahrstreifenwechsel nach links umfasst, dann kann das Berechnen 216 das kooperative Fahrmanöver so berechnen, dass das kooperative Fahrmanöver einen zweifachen Fahrstreifenwechsel des Fahrzeugs (200) nach links umfasst, beispielsweise um den Einfachen Fahrstreifenwechsel nach links des anfragenden Fahrzeugs 100 zu ermöglichen.

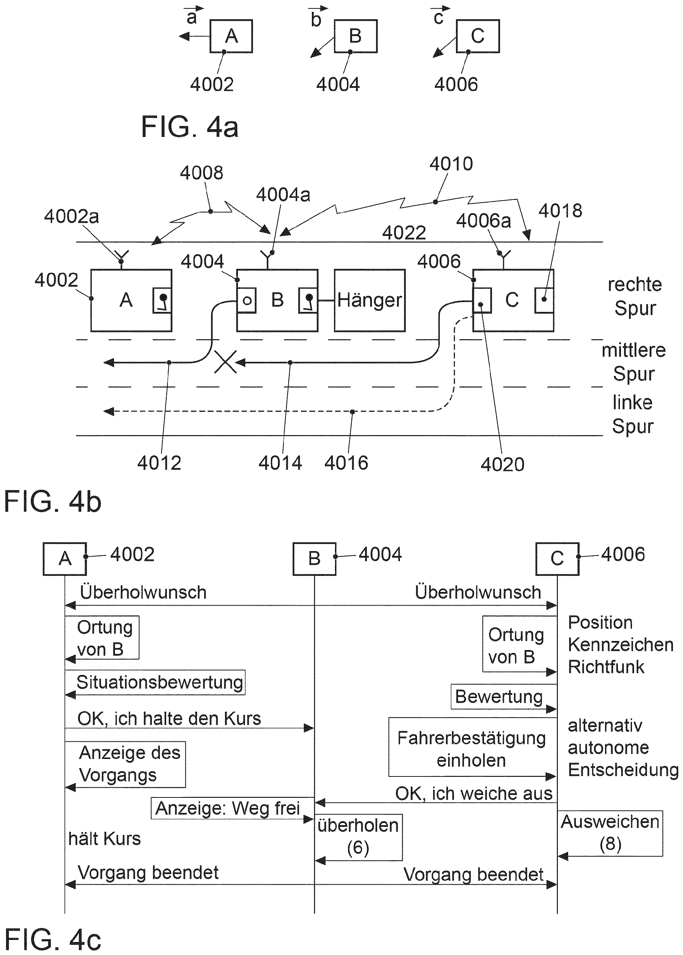

Fig. 4a zeigt eine Übersicht des beispielhaften Ausführungsbeispiels. Drei Fahrzeuge A 4002, B 4004, C 4006 fahren hintereinander. Die Geschwindigkeiten verhalten sich wie folgt: *Vₐ < V_{b} < V_{c-}* Sowohl B 4004 als auch C 4006 planen einen Überholvorgang. Diese Situation tritt z.B. häufig auf Autobahnen auf, wenn ein Fahrzeug B 4004 mit einem Anhänger einen LKW A 4002 überholt und dabei den schnelleren rückwärtigen Verkehr C 4006 berücksichtigen muss.

Es wäre vorteilhaft, wenn C 4006 vom Überholwunsch Kenntnis hat und bereit ist, z.B. auf eine dritte Spur auszuweichen. Des Weiteren wäre es vorteilhaft, wenn C 4006 frühzeitig vom geplanten Überholvorgang Kenntnis hätte, um entsprechend zu reagieren. Im Idealfall könnte der Überholvorgang von B 4004 und C 4006 automatisch synchronisiert und ausgeführt werden.

Fig. 4b zeigt eine weitere Übersicht des Systems. A 4002, B 4004, und C 4006 sind Fahrzeuge mit unterschiedlichen Geschwindigkeiten, 4002a, 4004a und 4006a Antennen eines Car-2-Car Kommunikationssystems, 4008 und 4010 Kommunikationswege zwischen den Fahrzeugen, 4012 ein geplanter Weg des Überholvorganges von B, 4014 ein geplanter Weg des Überholvorganges von C, der zur Kollision mit B führen könnte, 4016 ein Weg des Überholvorganges von C, bei Kenntnis des Überholwunsches von B, und 4018 eine Rückwärtige Sensorik. Diese kann beispielsweise eine Kamera, einen Lichtsensor, ein Radarsystem, ein LIDAR System, oder einen Ultraschallsensor umfassen. 4020 zeigt eine Front Sensorik. Diese kann beispielsweise eine Kamera, einen Lichtsensor, ein Radarsystem, ein LIDAR System oder einen Ultraschallsensor umfassen. 4022 zeigt einen Kommunikationspfad, in dem ein Fahrzeug mitteilt, dass Ihm ein Fahrzeug vorauseilt. Im jeweiligen Fahrzeug befindet sich zusätzlich eine Rechnereinheit zur Auswertung der Sensorik (beispielsweise das Kontrollmodul 16 oder 22) und der Kommunikationsdaten sowie eine HMI Schnittstelle zur Interaktion mit dem Fahrer. Über das HMI kann der Fahrer zum Beispiel einen Überholwunsch signalisieren und eine Rückmeldung erhalten, ob der rückwärtige Verkehr den Überholvorgang zulässt. Die Erkennung eines Überholwunsches als Fahrintention kann in manchen Ausführungsbeispielen anhand typischer vorbereitender Handlungen wie Kopf/Augenbewegungen in Richtung Seiten/Rückspiegel, Herunterschalten, dichtes Auffahren, Beschleunigen, Setzen des Blinkers etc. erkannt werden.

In einer beispielhaften Implementierung kann das Fahrzeug ausgebildet sein, etwa im Bestimmen 220, anhand der verfügbaren Daten aus unterschiedlichen Quellen (Fahrzeug-zu-Fahrzeug-Kommunikation, Online-Daten, GPS, Kameradaten, LIDAR-Daten, Laufzeitsensoren) ein Umgebungsmodell zu erstellen. Die Daten können beispielsweise aus folgenden Quellen stammen:
▪ Online-Daten über Verkehrsdichte, Position von anderen Fahrzeugen
▪ Position des Fahrzeugs aus Fahrzeug-zu-Fahrzeug-Nachrichten, Status und Fahrvektoren von Fahrzeugen in der näheren Umgebung
▪ GPS eigene Position
▪ Front-Radar Abstand / Fahrvektor vorausfahrender Fahrzeuge
▪ Front-Kamera Abstand und Nummernschild (Identifikation) vorausfahrender Fahrzeuge ▪ Rück-Radar Abstand / Fahrvektor rückwärtiger Fahrzeuge
▪ Rück-Kamera Abstand und Nummernschild (Identifikation) rückwärtiger Fahrzeuge ▪ LIDAR Laserscanner, RADAR
▪ Fahrzeug-zu-Fahrzeug 802.11p Ortung von Fahrzeugen durch Ihr Fahrzeug-zu-Fahrzeug 802.11p Signal (Funkortung)
▪ Kursdaten

Entsprechende Fahrintentionsnachrichten können beispielsweise folgende Daten umfassen:
▪ Fahrzeug-Identifikation
▪ Position
▪ Fahrvektor/Trajektorie
▪ Änderung des Fahrvektors
▪ Anzahl der vorweg fahrenden Fahrzeuge
▪ Abstand zu vorausfahrenden Fahrzeugen
▪ Vorhandensein von Verkehrslücken bei Kette von vorausfahrenden Fahrzeugen
▪ Manövrierwunsch
▪ Bestätigung

Ein Fahrvektor/Trajektorie kann dabei beispielsweise eine Richtung, eine Geschwindigkeit und/oder eine Richtungs-/Geschwindigkeitsänderung umfassen. Ein Fahrvektor kann beispielsweise auf für das geplante Fahrmanöver definiert werden, etwa für eine gewünschte Änderung des Fahrvektors.

Im Überholbeispiel mit den Fahrzeugen A 4002, B 4004, C 4006 ergibt sich zum Beispiel folgendes Umgebungsbild mit vorausberechneten Fahrvektoren. Sowohl B 4004, als C 4006 planen einen Überholvorgang.

Zur Vermeidung einer Kollision findet beispielsweise folgende in Fig. 4c gezeigte Fahrzeug-zu-Fahrzeug-Kommunikation zwischen den Fahrzeugen statt:
▪ B 4004 stellt eine Fahrintentionsnachricht mit einem Überholwunsch (Einfacher Fahrstreifenwechsel) für die Fahrzeuge in der Umgebung A 4002 und C 4006 bereit
▪ A 4002 und C 4006 Orten B 4004, beispielsweise über eine Position, die in der Fahrintentionsnachricht umfasst ist, sein Kennzeichen, oder durch Richtfunk
▪ A 4002 und C 4006 führen eine Situationsbewertung mit einer Relevanzbewertung durch (beispielsweise durch Ermitteln 220)
▪ Fahrzeug A 4002 signalisiert B 4004, dass es seinen Kurs hält und zeigt dem Fahrer eine entsprechende Mitteilung an
▪ Fahrzeug C 4006 holt eine Bestätigung durch den Fahrer ein (oder trifft die Entscheidung autonom) und stellt B eine Nachricht über ein Akzeptieren bereit, die B 4004 anzeigt, dass C 4006 einen doppelten Fahrstreifenwechsel ausführt und ausweicht
▪ Fahrzeug B 4004 signalisiert dem Fahrer (oder einem automatischen Fahrzeugsteuersystem), dass der Weg frei ist und überholt
▪ Fahrzeug B 4004 signalisiert A 4002 und C 4006, dass der Vorgang beendet ist

Im Ergebnis haben sich A 4002, B 4004, C 4006 auf ein gemeinsames Vorgehen verständigt. A 4002 behält seinen Fahrvektor bei. B 4004 überholt A 4002 und hat sich darüber mit C 4006 abgestimmt. C 4006 überholt ebenfalls, wird dabei jedoch auf B 4004 Rücksicht nehmen. B4.

In zumindest manchen Ausführungsbeispielen kann das Kontrollmodul 24 ausgebildet sein, die Verfahrensschritte 210-240 auszuführen.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung
- 12: Schnittstelle
- 14: Positionierungsmodul
- 16: Kontrollmodul
- 18: Fahrzeug-zu-Fahrzeug-Schnittstelle
- 20: Vorrichtung
- 22: Fahrzeug-zu-Fahrzeug-Schnittstelle
- 24: Kontrollmodul
- 26: Schnittstelle
- 100: Fahrzeug
- 110: Erhalten von Information über eine Fahrintention
- 120: Bestimmen einer Position
- 125: Berechnen von Information über geplante Ausführung
- 130: Bestimmen der Fahrintentionsnachricht
- 140: Berechnen von Übertragungsparametern
- 150: Bereitstellen der Fahrintentionsnachricht
- 155: Erhalten von Nachricht über Akzeptieren des kooperativen Fahrmanövers
- 160: Durchführen des kooperativen Fahrmanövers
- 200: Fahrzeug
- 210: Erhalten einer Fahrintentionsnachricht
- 212: Erhalten von ein oder mehreren weiteren Fahrintentionsnachrichten
- 214: Erhalten von Information über eigene Fahrintention
- 216: Berechnen eines kooperativen Fahrmanövers
- 218: Vereinbarkeit Überprüfen
- 220: Ermitteln von Information über Kooperation
- 230: Bestimmen von Information über Fahrmanöver
- 232: Ermitteln von Abstand
- 234: Ermitteln einer Ausführung des Fahrmanövers
- 236: Berechnen, ob Fahrmanöver möglich
- 240: Bereitstellen einer Fahrassistenz
- 2002: Fahrzeug
- 2004: Fahrzeuge in Umgebung des Fahrzeugs
- 2100: Verkehrslücke
- 4002: Fahrzeug A
- 4002a: Antenne des Fahrzeugs A
- 4004: Fahrzeug B
- 4004a: Antenne des Fahrzeugs B
- 4006: Fahrzeug C
- 4006a: Antenne des Fahrzeugs C
- 4008: Kommunikationsweg zwischen Fahrzeug A und B
- 4010: Kommunikationsweg zwischen Fahrzeug B und C
- 4012: Geplanter Weg von B
- 4014: Geplanter Weg von C
- 4016: Korrigierter Weg von C
- 4018: Rückwärtige Sensorik
- 4020: Front-Sensorik
- 4022: Kommunikationspfad

## Patentansprüche

1. Verfahren zum Initiieren eines kooperativen Fahrmanövers durch Bereitstellen einer Fahrintentionsnachricht für Fahrzeuge in einer Umgebung eines Fahrzeugs (100), wobei die Fahrintentionsnachricht Information über eine Intention eines Fahrers oder eines zumindest teilautomatischen Fahrzeugsteuersystems des Fahrzeugs (100), ein Fahrmanöver durchzuführen, umfasst, mit
Erhalten (110) von Information über eine Fahrintention, wobei die Fahrintention auf der Intention zum Durchführen des Fahrmanövers basiert;
Bestimmen (120) einer Position des Fahrzeugs (100);
Bestimmen (130) der Fahrintentionsnachricht, basierend auf der Information über die Fahrintention;
Berechnen (140) von Übertragungsparametern für die Fahrintentionsnachricht, wobei die Übertragungsparameter eine Wiederholrate und einen Sendezeitpunkt umfassen, basierend auf einer gewünschten Empfangswahrscheinlichkeit der Fahrintentionsnachricht, der Fahrintention und der Position des Fahrzeugs; und
Bereitstellen (150) der Fahrintentionsnachricht als direkte Fahrzeug-zu-Fahrzeug-Nachricht für die Fahrzeuge in der Umgebung des Fahrzeugs (100) basierend auf den Übertragungsparametern.

2. Das Verfahren Anspruch 1, ferner umfassend
Empfangen (155) einer Nachricht über ein Akzeptieren des kooperativen Fahrmanövers, als Antwort auf die Fahrintentionsnachricht, von zumindest einem der Fahrzeuge in der Umgebung des Fahrzeugs, wobei das Berechnen (140) der Übertragungsparameter ferner auf der Nachricht über das Akzeptieren des kooperativen Fahrmanövers basiert.

3. Das Verfahren gemäß einem der vorhergehenden Ansprüche, ferner umfassend Durchführen (160) des kooperativen Fahrmanövers, basierend auf der Fahrintentionsnachricht und basierend auf der Nachricht über das Akzeptieren des kooperativen Fahrmanövers.

4. Das Verfahren gemäß einem der vorhergehenden Ansprüche, wobei das Bestimmen (130) der Fahrintentionsnachricht ferner auf der Position des Fahrzeugs (100) basiert, und wobei die Fahrintentionsnachricht ferner Information über die Position des Fahrzeugs (100) und/oder Information über einen aktuell genutzten Fahrstreifen des Fahrzeugs (100) umfasst.

5. Das Verfahren gemäß einem der vorhergehenden Ansprüche, ferner umfassend Berechnen (125) von Information über eine geplante Durchführung des Fahrmanövers, basierend auf der Position des Fahrzeugs, wobei die Information über die geplante Durchführung des Fahrmanövers Information über zumindest ein Element der Gruppe von erstmöglicher, geplanter Fahrstreifenwechselpunkt, letztmöglicher Fahrstreifenwechselpunkt und Phase des Fahrmanövers, und wobei die Fahrintentionsnachricht ferner die Information über die geplante Durchführung des Fahrmanövers umfasst.

6. Vorrichtung (10) für ein Fahrzeug (100), zum Initiieren eines kooperativen Fahrmanövers durch Bereitstellen einer Fahrintentionsnachricht für Fahrzeuge in einer Umgebung des Fahrzeugs (100), wobei die Fahrintentionsnachricht Information über eine Intention eines Fahrers des Fahrzeugs (100), ein Fahrmanöver durchzuführen, umfasst, umfassend
eine Schnittstelle (12), ausgebildet zum Erhalten von Information über eine Fahrintention, wobei die Fahrintention auf dem Wunsch des Fahrers zum Durchführen des Fahrmanövers basiert;
ein Positionierungsmodul (14), ausgebildet zum Bestimmen einer Position des Fahrzeugs (100); und
ein Kontrollmodul (16), ausgebildet zum:
Steuern der Schnittstelle (12), des Positionierungsmoduls (14) und einer Fahrzeug-zu-Fahrzeug-Schnittstelle (18),
Bestimmen der Fahrintentionsnachricht, basierend auf der Information über die Fahrintention,
Berechnen von Übertragungsparametern für die Fahrintentionsnachricht, wobei die Übertragungsparameter eine Wiederholrate und einen Sendezeitpunkt umfassen, basierend auf einer gewünschten Empfangswahrscheinlichkeit der Fahrintentionsnachricht, der Fahrintention und der Position des Fahrzeugs, und Bereitstellen der Fahrintentionsnachricht als direkte Fahrzeug-zu-Fahrzeug-Nachricht über die Fahrzeug-zu-Fahrzeug-Schnittstelle (18) für die Fahrzeuge in der Umgebung des Fahrzeugs (100) basierend auf den Übertragungsparametern.

7. Programm mit einem Programmcode zum Durchführen des Verfahrens gemäß einem der Ansprüche 1 bis 5, wenn der Programmcode auf einem Computer, einem Prozessor, einem Kontrollmodul oder einer programmierbaren Hardwarekomponente ausgeführt wird.

## Claims

1. Method for initiating a cooperative driving maneuver by providing a driving intention notification for vehicles in an environment of a vehicle (100), wherein the driving intention notification comprises information about an intention of a driver or of an at least partially automated vehicle control system of the vehicle (100) to carry out a driving maneuver, with
receiving (110) information about a driving intention, wherein the driving intention is based on the intention to carry out the driving maneuver;
determining (120) a position of the vehicle (100);
determining (130) the driving intention notification based on the information about the driving intention;
calculating (140) transmission parameters for the driving intention notification, wherein the transmission parameters include a repetition rate and a transmission point in time based on a desired reception probability of the driving intention notification, the driving intention, and the position of the vehicle; and
providing (150) on the basis of the transmission parameters the driving intention notification as a direct vehicle-to-vehicle notification for the vehicles in the vicinity of the vehicle (100).

2. Method of Claim 1, further comprising
receiving (155) a notification about an acceptance of the cooperative driving maneuver, in response to the driving intention notification, from at least one of the vehicles in the vicinity of the vehicle, wherein the calculation (140) of the transmission parameters is further based on the notification about the acceptance of the cooperative driving maneuver.

3. The method according to either of the preceding claims, further comprising
carrying out (160) the cooperative driving maneuver based on the driving intention notification and based on the notification of the acceptance of the cooperative driving maneuver.

4. Method according to any one of the preceding claims, wherein the determination (130) of the driving intention notification is further based on the position of the vehicle (100), and wherein the driving intention notification further comprises information about the position of the vehicle (100) and/or information about a currently used lane of the vehicle (100).

5. Method according to any one of the preceding claims, further comprising calculating (125) information about a planned implementation of the driving maneuver based on the position of the vehicle, wherein the information about the planned implementation of the driving maneuver includes information about at least one element of the group consisting of the first possible planned lane change point, the last possible lane change point, and the phase of the driving maneuver; and wherein the driving intention notification further comprises information about the planned implementation of the driving maneuver.

6. Device (10) for a vehicle (100) for initiating a cooperative driving maneuver by providing a driving intention notification for vehicles in an environment of the vehicle (100), wherein the driving intention notification comprises information about an intention of a driver of the vehicle (100) to carry out a driving maneuver, comprising
an interface (12) designed to receive information about a driving intention, wherein the driving intention is based on the driver's desire to carry out the driving maneuver;
a positioning module (14) designed to determine a position of the vehicle (100); and
a control module (16) designed to:
control the interface (12), the positioning module (14), and a vehicle-to-vehicle interface (18),
determine the driving intention notification based on the information about the driving intention,
calculate transmission parameters for the driving intention notification, wherein the transmission parameters include a repetition rate and a transmission point in time, based on a desired reception probability of the driving intention notification, the driving intention, and the position of the vehicle, and
provide on the basis of the transmission parameters the driving intention notification as a direct vehicle-to-vehicle notification via the vehicle-to-vehicle interface (18) for the vehicles in the vicinity of the vehicle (100).

7. Program having a program code for implementing the method according to any one of Claims 1 to 5 if the program code is executed on a computer, a processor, a control module, or a programmable hardware component.

## Revendications

1. Procédé de démarrage ou de réalisation d'une manœuvre de conduite coopérative par fourniture d'un message d'intention de conduite à des véhicules dans un environnement d'un véhicule (100), dans lequel le message d'intention de conduite comprend des informations sur l'intention d'un conducteur ou d'un système de commande de véhicule au moins partiellement automatique du véhicule (100) d'exécuter une manœuvre de conduite, avec
l'obtention (110) des informations sur une intention de conduite, dans lequel l'intention de conduite est basée sur l'intention d'exécuter la manœuvre de conduite ;
la détermination (120) d'une position du véhicule (100) ;
la détermination (130) du message d'intention de conduite en fonction des informations sur l'intention de conduite ;
le calcul (140) des paramètres de transmission pour le message d'intention de conduite, les paramètres de transmission comprenant un taux de répétition et un moment d'émission basés sur une probabilité souhaitée de réception du message d'intention de conduite, de l'intention de conduite et de la position du véhicule ; et
la fourniture (150) du message d'intention de conduite en tant que message direct de véhicule à véhicule pour les véhicules dans l'environnement du véhicule (100) en fonction des paramètres de transmission.

2. Procédé selon la revendication 1, comprenant en outre
la réception (155) d'un message concernant une acceptation de la manœuvre de conduite coopérative, en tant que réponse au message d'intention de conduite, de l'au moins un des véhicules dans l'environnement du véhicule, dans lequel le calcul (140) des paramètres de transmission est en outre basé sur le message concernant l'acceptation de la manœuvre de conduite coopérative.

3. Procédé selon l'une quelconque des revendications précédentes, comprenant en outre
l'exécution (160) de la manœuvre de conduite coopérative en fonction du message d'intention de conduite et en fonction du message concernant l'acceptation de la manœuvre de conduite coopérative.

4. Procédé selon l'une quelconque des revendications précédentes, dans lequel la détermination (130) du message d'intention de conduite est en outre basée sur la position du véhicule (100), et dans lequel le message d'intention de conduite comprend en outre des informations sur la position du véhicule (100) et/ou des informations sur une voie actuellement utilisée du véhicule (100).

5. Procédé selon l'une quelconque des revendications précédentes, comprenant en outre le calcul (125) des informations sur une exécution prévue de la manœuvre de conduite en fonction de la position du véhicule, dans lequel les informations sur l'exécution prévue de la manœuvre de conduite comportent des informations sur au moins un élément du groupe constitué par un premier point de changement de voie prévu possible, un dernier point de changement de voie possible et une phase de la manœuvre de conduite, et dans lequel le message d'intention de conduite comprend en outre les informations sur l'exécution prévue de la manœuvre de conduite.

6. Dispositif (10) pour un véhicule (100) permettant de démarrer ou réaliser une manœuvre de conduite coopérative par fourniture d'un message d'intention de conduite à des véhicules dans un environnement du véhicule (100), dans lequel le message d'intention de conduite comprend des informations sur l'intention d'un conducteur du véhicule (100) d'exécuter une manœuvre de conduite, comprenant
une interface (12) conçue pour recevoir des informations sur une intention de conduite, dans lequel l'intention de conduite est basée sur le souhait du conducteur d'exécuter la manœuvre de conduite ;
un module de positionnement (14) conçu pour déterminer une position du véhicule (100) ; et
un module de commande (16) conçu :
pour commander l'interface (12), du module de positionnement (14) et une interface de véhicule à véhicule (18),
pour déterminer le message d'intention de conduite en fonction des informations sur l'intention de conduite,
pour calculer des paramètres de transmission pour le message d'intention de conduite, les paramètres de transmission comprenant un taux de répétition et un moment d'émission basés sur une probabilité souhaitée de réception du message d'intention de conduite, de l'intention de conduite et de la position du véhicule, et
pour fournir le message d'intention de conduite sous la forme d'un message direct de véhicule à véhicule à l'aide de l'interface de véhicule à véhicule (18) aux véhicules dans l'environnement du véhicule (100) en fonction des paramètres de transmission.

7. Programme comportant un code de programme permettant de mettre en œuvre le procédé selon l'une quelconque des revendications 1 à 5, lorsque le code de programme est exécuté sur un ordinateur, un processeur, un module de commande ou un composant matériel programmable.
